# DEMANDE DE BREVET EUROPEEN

(11) **EP 2 042 039 A1**
(43) Date de publication de la demande: **01.04.2009**
(21) Numéro de dépôt: 08305479.1
(22) Date de dépôt: 14.08.2008
(51) Int. Cl.: A22B 5/20

(54) **Entraînement d'un chariot porte outil de fente d'une machine à fendre les carcasses d'animaux**

(30) Priorité: 28.09.2007 FR 0706805
(71) Demandeur: Durand International, 07210 Baix (FR)
(72) Inventeur: Klein, Nicolas, 26270 Loriol sur Drome (FR)
(74) Mandataire: Gaillarde, Frédéric F. Ch.

(57) **Abrégé**

L'invention concerne un dispositif d'entraînement (13) d'un chariot (7) porte outil de fente destiné à une machine à fendre les carcasses d'animaux (1) incluant un chariot principal (6) ayant des moyens de guidage à coulissement (18a, 18b) pour un chariot (7) porte outil de fente ; un chariot (7) porte outil de fente supportant un outil de fente (8) ; des moyens (19) d'entraînement de l'outil de fente (8) afin de le rendre opératoire ; des moyens de programmation du fonctionnement ; des moyens (14) d'entraînement à coulissement du chariot (7) portés par le chariot principal (6) et connectés au chariot (7), et des moyens de commande desdits moyens d'entraînement, caractérisé d'une part, par des moyens (14) d'entraînement électrique aptes à être arrêtés dans une - ou des - position(s) réglable(s), précise(s) et connue(s) considérée(s) comme des positions de référence pour l'outil de fente ; d'autre part, en ce que les moyens de commande sont aptes à commander non seulement le fonctionnement et l'arrêt des moyens (14) d'entraînement électrique, mais aussi leur réglage en position, afin de régler la position de référence de l'outil de fente (8) en fonction des besoins ; les positions de référence pour l'outil de fente (8) étant choisies parmi les suivantes : position initiale escamotée, position initiale de fente, position finale de fente, position finale escamotée.

## Description

L'invention a pour objet l'entraînement d'un chariot porte outil de fente d'une machine à fendre les carcasses d'animaux. Elle concerne plus particulièrement d'une part un dispositif d'entraînement d'un chariot porte outil de fente, spécialement destiné à une machine à fendre les carcasses d'animaux, d'autre part une machine à fendre les carcasses d'animaux comprenant un tel dispositif d'entraînement. L'invention s'applique tout spécialement aux carcasses de porcs ou à celles d'autres animaux du même genre.

On connaît déjà une machine à fendre les carcasses d'animaux, à savoir les porcs, qui comprend :
- un chariot principal - formant bâti mobile - ayant des moyens de guidage à coulissement pour un chariot porte outil de fente,
- un chariot porte outil de fente supportant un outil de fente mobile, ledit chariot porte outil de fente étant mobile à coulissement sur le chariot principal entre une position escamotée et une position initiale de fente où l'extrémité distale de l'outil de fente est apte à interférer avec une carcasse positionnée pour être traitée par la machine,
- un dispositif d'entraînement du chariot porte outil de fente - et donc de l'outil de fente lui-même,
- des moyens d'entraînement de l'outil de fente afin de le rendre opératoire,
- et des moyens de programmation du fonctionnement de la machine.

De façon classique, le dispositif d'entraînement du chariot porte outil de fente comprend un vérin pneumatique, assurant un déplacement entre deux positions extrêmes fixes soit une position totalement rentrée et une position totalement sortie. La course de coulissement entre ces deux positions extrêmes est déterminée par des butées mécaniques (ou saillies) ménagées sur le chariot principal et le chariot porte outil de fente.

De façon également connue, une telle machine comprend en outre un dispositif d'appui ventral et/ou un dispositif d'appui dorsal, mobile et/ou déformable, apte à venir en appui sur la carcasse traitée par la machine du côté ventral et/ou dorsal respectivement. Le dispositif d'appui ventral est situé du même côté que le chariot porte outil de fente et l'outil de fente. Le dispositif d'appui dorsal est situé du côté opposé au chariot porte outil de fente et à l'outil de fente. Plus précisément, le dispositif d'appui ventral et/ou le dispositif d'appui dorsal est porté par le chariot principal, à savoir le chariot porte outil de fente.

D'autre part, de façon également connue, le chariot porte outil de fente comporte des moyens de coulissement et des moyens d'entraînement et/ou d'amortissement du mouvement pour le dispositif d'appui ventral (éventuellement le dispositif d'appui dorsal), lequel est porté par le chariot porte outil de fente de façon coulissante selon la direction avant-arrière.

Il est associé à une telle machine des moyens support des carcasses d'animaux à traiter, agencés pour assurer un défilement des carcasses à traiter dans la machine.

Selon les réalisations, l'outil de fente est soit un ou un ensemble de couteaux (FR-A-2535944) soit une lame de scie circulaire entraînée en rotation (US-A-5655960, EP-A-1125502) par des moyens d'entraînement appropriés.

Selon les réalisations, la machine comprend soit un seul ensemble situé d'un côté des moyens support des carcasses d'animaux à traiter (US-A-5655960) soit deux ensembles situés de part et d'autre de ces moyens support (FR-A-2535944, EP-A-1125502). Dans ce dernier cas, un premier ensemble inclut le chariot principal, le chariot porte outil de fente, l'outil de fente, et le dispositif d'appui ventral, alors qu'un second ensemble inclut le dispositif d'appui dorsal.

Selon une réalisation (EP-A-112550219), le premier ensemble inclut une première colonne supportant le chariot principal, le chariot porte outil de fente, l'outil de fente et le dispositif d'appui ventral, alors que le second ensemble inclut une seconde colonne supportant le dispositif d'appui dorsal, la première colonne et la seconde colonne formant un ensemble monobloc.

Avec une telle machine, dans les différentes configurations qu'elle peut avoir, les moyens de programmation du fonctionnement sont programmés pour qu'en fonctionnement et alors qu'une carcasse est en situation d'être traitée par la machine:
- on amène le chariot porte outil de fente dans la position initiale de fente souhaitée,
- et on met en position la carcasse par la mise en oeuvre du dispositif d'appui ventral et du dispositif d'appui dorsal.
Puis, bien entendu, on met en oeuvre l'outil de fente.

Selon les réalisations, la machine est programmée pour assurer soit une fente complète de la carcasse en demi-carcasses soit une fente partielle, laissant un lambeau de peau non fendu dans le dos et vers la tête (cette coupe étant connue sous l'expression de « coupe américaine »).

Dans le cas où l'outil de coupe est une lame se scie circulaire, celle-ci s'use au fur et à mesure du fonctionnement et doit être affûtée de temps à autre. Il en résulte que le diamètre de la lame de scie diminue avec le temps, ce qui pose un problème. En effet, alors que, avec une lame de scie neuve, l'extrémité distale de la lame de scie peut être placée dans une position déterminée pour une coupe optimale, au fur et à mesure de l'usure de la lame de scie, son extrémité distale s'écarte de plus en plus - vers l'arrière - de cette position optimale.

Dès lors, soit on est amené à utiliser la machine dans des conditions qui ne sont plus tout à fait optimales - avec les conséquences inhérentes sur la qualité de la fente réalisée - soit - si l'on souhaite garder la même qualité de fente - on doit régler la machine en agissant sur les butées mécaniques de fin de course de coulissement du chariot porte outil de fente, comme le suggère le document US-4653150. Une telle opération de réglage - qui vise à déplacer à coulissement le chariot porte outil de fente - est délicate à réaliser et elle prend du temps, ce qui diminue la cadence de production de la machine.

Un problème analogue se pose lorsque les caractéristiques des carcasses traitées varient avec le temps. Jusqu'à présent, une machine à fendre les carcasses fonctionne - au moins dans une série de cycles de fonctionnement - avec des carcasses identiques en ce qui concerne le type d'animal - par exemple les porcs - et analogues en ce qui concerne leurs caractéristiques notamment de forme et de taille. Même ainsi, la position relative entre l'extrémité distale de la lame de scie et la carcasse n'est pas parfaitement constante du fait des variations de forme et de taille - même légères - des carcasses successives traitées par la machine.

L'invention vise à résoudre ces différents problèmes au moyen d'une solution qui de construction simple et robuste, et facile à mettre en oeuvre.

A cet effet, et selon un premier aspect, l'invention consiste en un dispositif d'entraînement d'un chariot porte outil de fente, spécialement destiné à une machine à fendre les carcasses d'animaux, tout spécialement les porcs, ladite machine incluant :
- un chariot principal - formant bâti - ayant des moyens de guidage à coulissement pour un chariot porte outil de fente,
- un chariot porte outil de fente supportant un outil de fente mobile, ledit chariot porte outil de fente étant mobile à coulissement sur le chariot principal selon une direction avant-arrière ; lorsque le chariot porte outil de fente est en position initiale, ledit chariot porte outil de fente étant mobile à coulissement sur le chariot principal entre une position escamotée et une position initiale de fente où l'extrémité distale de l'outil de fente est apte à interférer avec une carcasse C traitée par la machine ; lorsque le chariot porte outil de fente est en position finale, ledit chariot porte outil de fente étant mobile à coulissement sur le chariot principal entre une position finale de fente et une position escamotée ou l'outil de fente est apte à ne pas interférer avec la carcasse C,
- des moyens d'entraînement de l'outil de fente afin de le rendre opératoire,
- et des moyens de programmation du fonctionnement,
ledit dispositif comprenant des moyens d'entraînement à coulissement du chariot porte outil de fente, portés par le chariot principal et connectés au chariot porte outil de fente, et des moyens de commande desdits moyens d'entraînement,
caractérisé :
- d'une part, par des moyens d'entraînement électrique aptes à être arrêtés dans une - ou des - position(s) réglable(s), précise(s) et connue(s) considérée(s) comme des positions de référence pour l'outil de fente,
- d'autre part, en ce que les moyens de commande sont aptes à commander non seulement le fonctionnement et l'arrêt des moyens d'entraînement électrique, mais aussi leur réglage en position, afin de régler la position de référence de l'outil de fente en fonction des besoins.

Les positions de référence pour l'outil de fente sont choisies parmi les positions suivantes : position initiale escamotée, position initiale de fente, position finale de fente, position finale escamotée. En particulier, la position initiale de fente est en relation avec la question de l'usure de l'outil de coupe, ici une lame se scie circulaire.

Selon une réalisation à laquelle le dispositif d'entraînement est particulièrement bien adapté, l'outil de fente est une lame de scie circulaire montée à rotation pour être opératoire. Selon une autre réalisation, l'outil de fente est un couteau ou un ensemble de couteaux.

Selon une réalisation, les moyens d'entraînement électriques comprennent un moteur ou un moto-réducteur porté par le chariot principal entraînant un organe mobile auquel est lié cinématiquement le chariot porte outil de fente. Selon une réalisation particulièrement avantageuse, le moteur ou moto-réducteur est de type brushless.

Selon différentes réalisations possibles, l'organe mobile lié cinématiquement au chariot porte outil de fente est une courroie, une chaîne ou un câble, une crémaillère, une vis sans fin.

Selon une réalisation, les moyens de commande sont responsifs à une commande manuelle ou à un signal provenant d'un automate programmable ou de moyens d'évaluation de présence ou de distance.

En particulier, et en relation avec le problème d'usure de la lame de scie circulaire exposé plus haut, les moyens de commande sont responsifs - précisément - au degré d'usure de la lame de scie et donc à son diamètre, de manière que la position initiale de sciage de la lame de scie reste constante, quel que soit le degré d'usure de la lame.

Dans ce cas, ce degré d'usure est déterminé de façon visuelle - par voie humaine ou par un équipement approprié - ou selon les moyens de programmation de la machine, par exemple en fonction du nombre de cycles accomplis.

Selon une autre réalisation, en relation cette fois avec le problème de variation du type d'animaux traités par la machine (porcs, porcelets, coches, ou veau par exemple), les moyens de commande sont responsifs au type et/ou aux caractéristiques de la carcasse.

Enfin, les moyens de commande peuvent être responsifs au type de fente à réaliser (coupe complète ou coupe américaine), et/ou à au moins une commande préprogrammée des moyens de programmation du fonctionnement de la machine, en fonction des besoins de la production.

Selon un second aspect, l'invention consiste en une machine à fendre les carcasses d'animaux, tout spécialement les porcs, incluant :
- un chariot principal - formant bâti mobile - ayant des moyens de guidage à coulissement pour un chariot porte outil de fente,
- un chariot porte outil de fente supportant un outil de fente mobile, ledit chariot porte outil de fente étant mobile à coulissement sur le chariot principal entre une position escamotée et une position initiale de fente où l'extrémité distale de l'outil de fente est apte à interférer avec une carcasse positionnée pour être traitée par la machine,
- des moyens d'entraînement de l'outil de fente afin de le rendre opératoire,
- et des moyens de programmation du fonctionnement,
cette machine étant caractérisée par le fait qu'elle comprend un dispositif d'entraînement du chariot porte outil de fente tel qu'il vient d'être décrit.

Selon une réalisation, la machine inclut également un dispositif d'appui ventral et/ou un dispositif d'appui dorsal, mobile et/ou déformable, apte à venir en appui sur la carcasse traitée par la machine du côté ventral et/ou dorsal respectivement, le dispositif d'appui ventral étant situé du même côté que le chariot porte outil de fente et l'outil de fente, le dispositif d'appui dorsal étant situé du côté opposé au chariot porte outil de fente et à l'outil de fente.

Dans ce cas et selon une réalisation, le dispositif d'appui ventral et/ou le dispositif d'appui dorsal est porté par le chariot principal, et plus particulièrement par le chariot porte outil de fente. A cet effet, le chariot porte outil de fente comporte des moyens de coulissement et des moyens d'entraînement et/ou d'amortissement du mouvement pour le dispositif d'appui ventral et/ou le dispositif d'appui dorsal, porté par le chariot porte outil de fente de façon coulissante selon la direction avant-arrière.

Selon les réalisations, les moyens de programmation du fonctionnement de la machine sont programmés soit pour une fente complète de la carcasse en deux demi carcasses soit pour une fente partielle de type coupe américaine.

Selon une réalisation, il est associé à la machine des moyens supports des carcasses d'animaux à traiter, agencés pour assurer un défilement des carcasses à traiter dans la machine.

Selon les réalisations, la machine est réalisée soit en un seul ensemble situé d'un côté des moyens support des carcasses d'animaux à traiter soit en deux ensembles situés de part et d'autre de ces moyens support.

Dans ce dernier cas, un premier ensemble inclut le chariot principal, le chariot porte outil de fente, l'outil de fente, et le dispositif d'appui ventral, tandis qu'un second ensemble inclut le dispositif d'appui dorsal. Selon une réalisation, le premier ensemble inclut une première colonne supportant le chariot principal, le chariot porte outil de fente, l'outil de fente et le dispositif d'appui ventral et le second ensemble inclut une seconde colonne supportant le dispositif d'appui dorsal. Dans ce cas, et selon une réalisation, la première colonne et la seconde colonne forment un ensemble monobloc.

Avec une machine à fendre les carcasses d'animaux telle qu'elle vient d'être décrite, les moyens de programmation du fonctionnement de la machine sont programmés pour qu'en fonctionnement et alors qu'une carcasse est en situation d'être traitée par la machine:
- on amène le chariot porte outil de fente dans la position initiale de fente souhaitée,
- et on met en position la carcasse à traiter par la mise en oeuvre conjuguée de part et d'autre de la carcasse du dispositif d'appui dorsal et du dispositif d'appui ventral, ladite mise en oeuvre conjuguée reposant sur un effet d'action - réaction entre les pressions d'air des chambres des vérins du dispositif d'appui dorsal et du dispositif d'appui ventral.
Puis, on met en oeuvre l'outil de fente.

Dans le cas où les moyens de programmation du fonctionnement sont programmés pour une fente partielle de type coupe américaine, on fait coulisser le dispositif d'appui ventral vers le côté où se trouve le dispositif d'appui dorsal, tout en maintenant ladite mise en oeuvre conjuguée du dispositif d'appui dorsal.

On décrit maintenant plusieurs modes de réalisation de l'invention à l'aide des dessins annexés, dans lesquels :

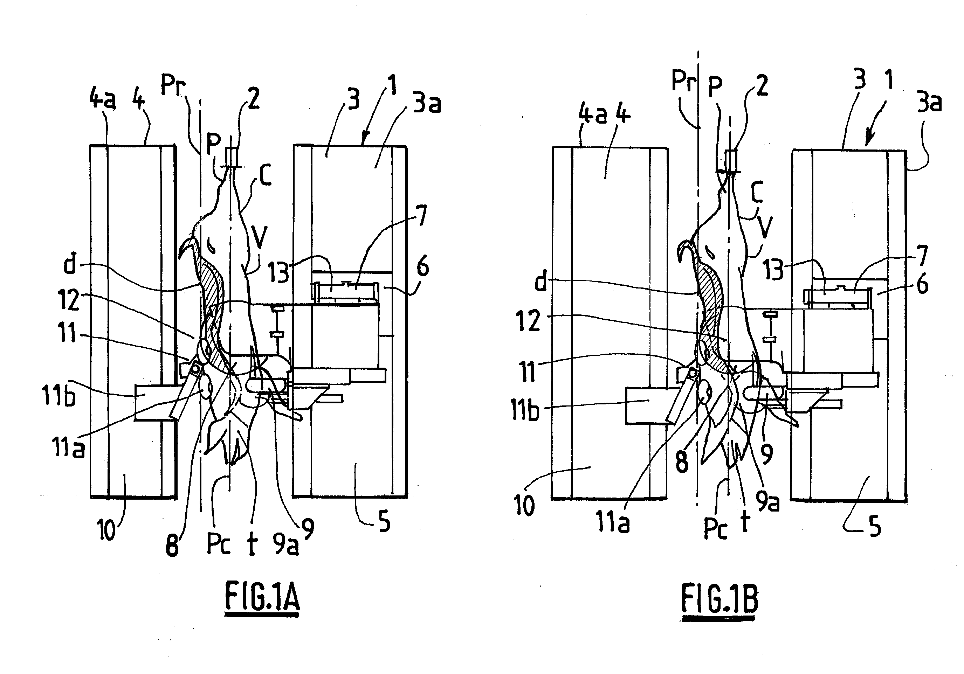

- Les figures 1A et 1B illustrent de façon schématique et de côté, une machine à fendre des carcasses de porcs, dans la réalisation où la machine est en deux ensembles de part et d'autre des moyens support des carcasses à traiter, l'un où se trouvent l'outil de fente - en l'espèce une lame de scie - et le dispositif d'appui ventral, l'autre où se trouve le dispositif d'appui dorsal. La lame de scie, neuve ou en tout état de cause non usée dans le cas de la figure 1A, présente son diamètre nominal d'origine D. Elle présente un certain degré d'usure avec un diamètre réduit d de la valeur dans le cas de la figure 1B.
- La figure 2 illustre de côté une réalisation possible du dispositif d'entraînement selon l'invention, dans la réalisation où la machine est en deux ensembles, le chariot porte outil de fente supportant le dispositif d'appui ventral, tandis que le dispositif d'appui dorsal est porté par un chariot distinct opposé. Dans cette figure, le chariot porte lame de scie est en poisition avancée frontalement.
- La figure 3 est une vue en perspective de dessus du dispositif d'entraînement de la figure 2.
- La figure 4 est une vue en perspective de dessous, partielle et éclatée du dispositif d'entraînement des figures 2 et 3.

On se réfère maintenant aux figures 1A et 1B qui illustrent de façon schématique une machine 1 à fendre les carcasses C d'animaux - ici des porcs - ayant une tête t, des pattes arrière p, un côté ventral v et un côté dorsal d.

L'invention peut s'appliquer au cas de carcasses d'animaux analogues à des porcs - eu égard à la fente à réaliser - , par exemple des veaux.

Il est associé à la machine 1 des moyens support 2 des carcasses C, en l'espèce par les pattes arrière p, la tête t étant en bas.

Ces moyens support 2 comprennent par exemple un dispositif de convoyage sans fin, s'étendant horizontalement, supportant à intervalles plus ou moins réguliers des tinets ou des crochets auxquels sont accrochés les pattes arrières p.

De tels moyens support 2 assurent le défilement dans la machine 1, des carcasses C à traiter, horizontalement et dans un plan Pc vertical représenté sur les figures par sa trace.

Dans la réalisation représentée sur les figures 1A et 1B, la machine 1 est en deux ensembles 3, 4, situés de part et d'autre du plan Pc, donc des moyens support 2.

Le premier ensemble 3 (situé sur les figures 1A et 1B du côté droit des moyens support 2) comprend un premier bâti 3a et une première colonne 5 portée par le premier bâti 3a.

Cette première colonne 5 supporte un chariot principal 6, un chariot 7 porte outil de fente, l'outil de fente 8 - ici une lame de scie -, et un dispositif d'appui ventral 9. L'outil de fente 8 peut être alternativement un couteau ou un ensemble de couteaux.

Le second ensemble 4 (situé sur les figures du côté gauche des moyens support 2) comprend un second bâti 4a et une seconde colonne 10 portée par le second bâti 4a. La seconde colonne 10 supporte un dispositif d'appui dorsal 11.

Dans une réalisation, la première colonne 5 et la seconde colonne 10 forment un ensemble monobloc ayant une forme générale en U, porté par une superstructure de la machine de manière coulissante sur une certaine course horizontale, parallèlement au plan de défilement des carcasses, le long des moyens support 2 des carcasses C. Des moyens d'entraînement sont prévus à cet effet.

La structure générale d'une telle machine est décrite dans le document EP-A-1 125 502 auquel on peut se référer.

Dans une autre réalisation, la machine est en un seul ensemble situé d'un côté du plan Pc, donc des moyens support 2. La structure générale d'une telle machine est décrite par exemple dans le document US 5 655 960 auquel on peut se référer.

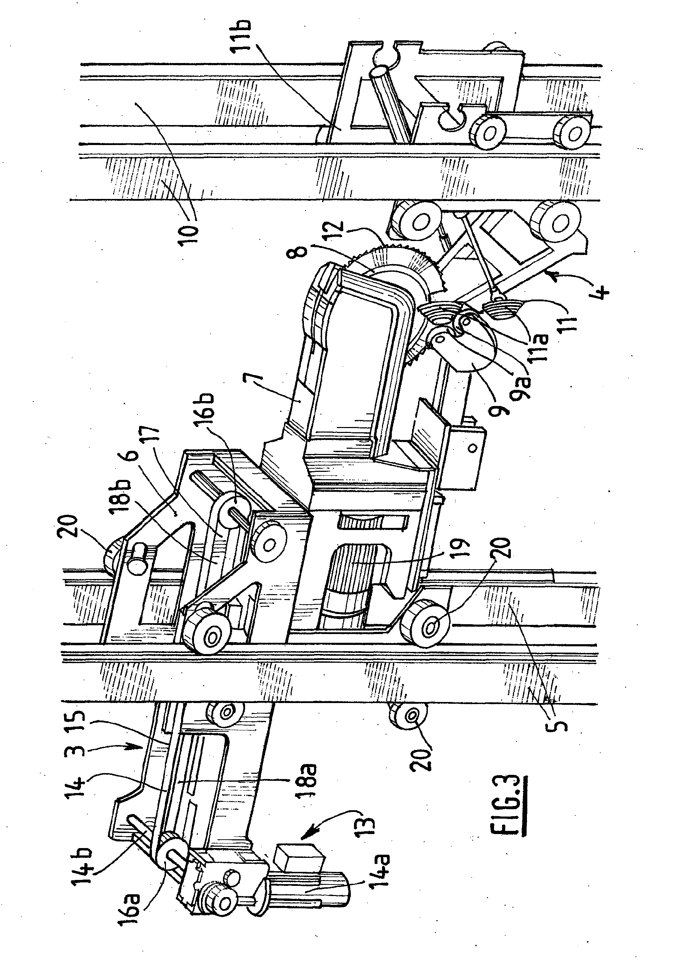

Le chariot principal 6 forme une sorte de bâti mobile intermédiaire pour le chariot 7 porte lame de scie, la lame de scie 8 et le dispositif d'appui ventral 9. Le chariot principal 6 est monté sur la première colonne 5 de manière coulissante sur une certaine course verticale, par l'intermédiaire de moyens de coulissement - voir les rouleaux de guidage 20 du chariot 6, figure 3 - et de moyens d'entraînement appropriés.

Le chariot principal 6 inclut des moyens 18a de guidage à coulissement pour le chariot 7 porte lame de scie, pourvu de moyens 18b complémentaires. Ces moyens de guidage 18a, 18b, sont agencés pour que le chariot 7 porte lame de scie puisse coulisser horizontalement, perpendiculairement au plan de défilement des carcasses Pc. Ce mouvement de coulissement s'entend soit en direction de ce plan (ou encore frontalement ou vers l'avant) soit en direction opposée à ce plan (ou vers l'arrière).

Dans une réalisation, les moyens 18a sont du type rail de guidage et les moyens 18b sont du type coulisseau.

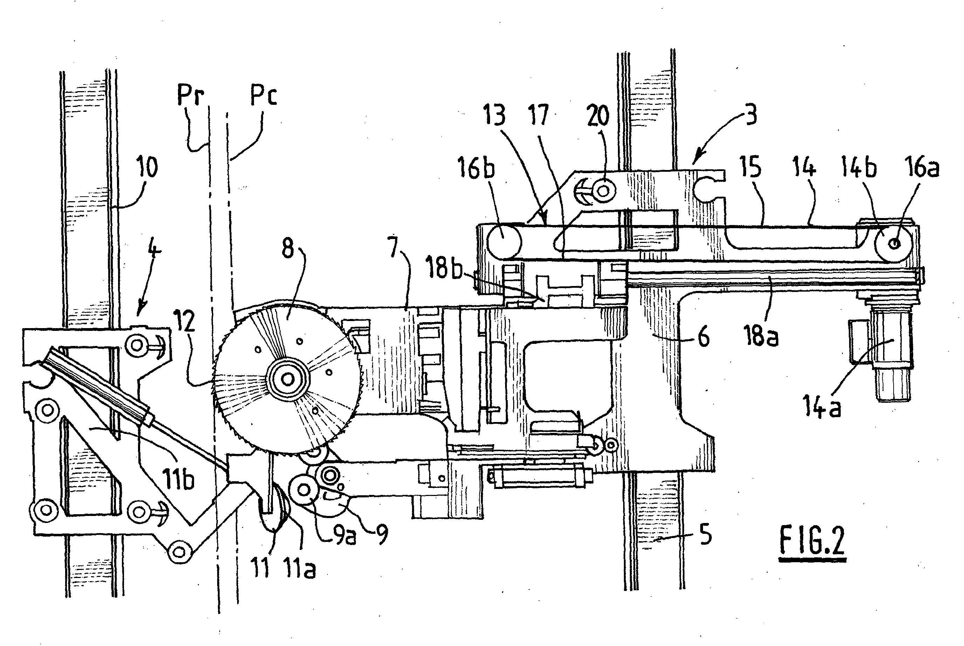

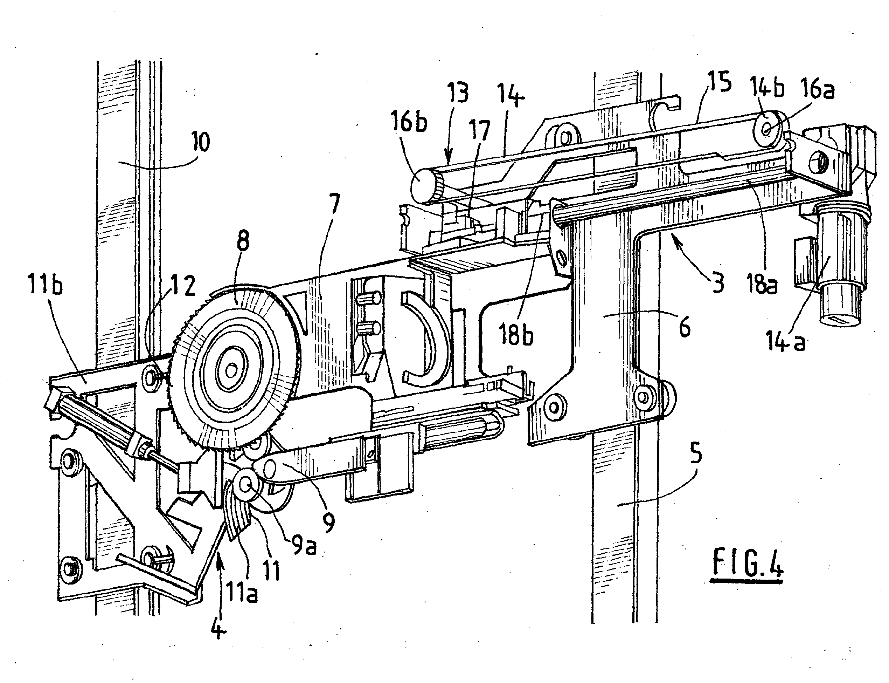

Comme on le voit sur les figures 2 et 4, les moyens 18b, de type coulisseau, sont situés vers le haut et vers l'arrière du chariot 7 porte lame, le chariot 7 étant placé vers l'avant en porte à faux.

Ce faisant, le chariot 7 porte lame de scie est mobile entre une position escamotée et une position initiale de fente qui correspond aux figures 1A et 1B, où l'extrémité distale 12 de la lame de scie 8 (la plus éloignée du premier bâti 3a) est apte à interférer avec une carcasse C positionnée pour être traitée par la machine. Comme le montrent les figures 1A et 1B, cette position initiale de fente est définie par un plan vertical de référence Pr. Le plan Pr est parallèle au plan Pc de défilement des carcasses. Le plan Pr est représenté sur les figures 1A et 1B. Le plan de référence Pr est en l'espèce situé sur les figures 1A et 1B à gauche du plan Pc de défilement des carcasses, c'est-à-dire qu'il est situé au-delà du plan Pc de défilement, par rapport au premier ensemble 3.

Le chariot principal 6 supporte également des moyens 19 d'entraînement de l'outil de fente 8, afin de le rendre opératoire, ici un moteur apte à faire pivoter la lame de scie 8. Ces moyens 19 sont visibles sur la figure 3, mais non représentés pour des raisons de clarté du dessin sur les figures 2 et 4. En l'espèce, le moteur 19 est situé vers l'arrière du chariot porte lame 7, en dessous des moyens 18b de type coulisseau.

Le dispositif d'appui ventral 9 et le dispositif d'appui dorsal 11 sont agencés de façon mobile et déformable. Ils sont aptes à venir en appui - grâce et par l'intermédiaire de galets 9a, 11 a - sur la carcasse C traitée par la machine du côté ventral v et du côté dorsal d, respectivement. Ces deux dispositifs 9, 11, ont pour fonction de définir le positionnement précis de la carcasse C à traiter, par rapport au positionnement de la lame de scie 8, de façon que la fente ou le sciage soit réalisé de façon précise à l'emplacement souhaité.

Le dispositif d'appui ventral 9 est situé du même côté que le chariot 7 porte lame de scie et que la lame de scie 8, tandis que le dispositif d'appui dorsal 11 est situé du côté opposé au chariot 7 porte lame de scie et à la lame de scie 8.

En l'espèce, le dispositif d'appui ventral 9 est porté indirectement par le chariot principal 6, et plus précisément par le chariot 7 porte lame de scie qui comporte des moyens de coulissement et des moyens d'entraînement et/ou d'amortissement du mouvement du dispositif d'appui ventral 9, selon la direction avant-arrière.

Quant au dispositif d'appui dorsal 11, il est porté par un chariot 11 b monté sur la seconde colonne 10 de manière coulissante sur une certaine course verticale, par l'intermédiaire de moyens de coulissement et de moyens d'entraînement.

La machine 1 comporte également un dispositif 13 d'entraînement du chariot 7 porte lame de coupe sur le chariot principal 6 dans la direction avant-arrière, perpendiculaire aux plans Pc et Pr.

Le dispositif d'entraînement 13 comprend en premier lieu des moyens 14 d'entraînement à coulissement du chariot 7 porte lame de coupe, portés par le chariot principal 6 et connectés au chariot 7 porte lame de coupe.

Le dispositif d'entraînement 13 comprend en second lieu des moyens de commande des moyens 14 d'entraînement.

La machine 1 comporte également des moyens de programmation de son fonctionnement. Ces moyens de programmation sont programmés soit pour une fente complète de la carcasse C en deux demi carcasses soit pour une fente partielle de type coupe américaine.

Le dispositif 13 d'entraînement du chariot 7 porte lame de coupe est tel, en premier lieu, que les moyens 14 d'entraînement sont des moyens d'entraînement électrique aptes à être arrêtés dans une position correspondant à une position initiale de fente réglable, précise et connue, correspondant au plan de référence Pr.

Dans la réalisation considérée, les moyens 14 d'entraînement électrique comprennent un moteur ou un moto-réducteur 14a porté par le chariot principal 6 entraînant un arbre 14b sur lequel est calée une roue dentée 16a entraînant un organe mobile 15 auquel est lié cinématiquement le chariot 7 porte lame de scie. Typiquement, ce moteur ou moto-réducteur 14a est de type brushless.

Le dispositif 13 d'entraînement du chariot 7 porte lame de coupe est tel, en second lieu, que les moyens de commande sont aptes à commander non seulement le fonctionnement et l'arrêt des moyens 14 d'entraînement électrique, mais aussi leur réglage en position, afin de régler la position initiale de fente de la lame de scie en fonction des besoins, à savoir que quel que soit le degré d'usure de la lame de scie 8, c'est-à-dire qu'elle ait son diamètre maximal nominal initial D (figure 1A) ou un diamètre réduit (figure 1 B), son extrémité distale 12 se trouve dans le plan de référence Pr.

L'organe mobile 15 lié cinématiquement au chariot 7 porte lame de scie est, dans la réalisation représentée sur la figures 2, 3 et 4, une courroie crantée tendue entre la roue dentée 16a et une roue dentée 16b, la roue dentée 16a étant située vers l'arrière du chariot principal 6 tandis que la roue dentée 16b est située vers l'avant de ce chariot en étant suffisamment écartée de la roue dentée 16a pour permettre la course de coulissement nécessaire, tandis que les axes des roues dentées 16a, 16b sont disposés horizontalement et parallèlement aux plans Pr et Pc.

Dans d'autres réalisations, l'organe mobile 15 est une chaîne ou d'un câble sans fin, d'une crémaillère ou d'une vis sans fin.

La courroie crantée 15 est fixée au chariot 7 porte lame de scie en un point - ou une zone - de fixation 17 .

De façon générale, les moyens de commande du dispositif d'entraînement 13 sont responsifs à une commande manuelle ou à un signal provenant d'un automate programmable ou de moyens d'évaluation de présence ou de distance incorporés ou associés fonctionnellement à la machine. En l'espèce, les moyens de commande sont responsifs au degré d'usure de la lame de scie 8 et donc à son diamètre, de manière que la position initiale de sciage reste constante quelle que soit le degré d'usure de la lame.

Le degré d'usure de la lame de scie 8 est déterminé de façon visuelle - par voie humaine ou par un équipement approprié tel que reconnaissance visuelle, détection de présence ou mesure de distance - ou selon les moyens de programmation de la machine. Par exemple, il est défini un certain diamètre théorique de la lame de scie 8 après un certain nombre de cycles de fonctionnement de la machine 1.

Ainsi, le fonctionnement peut être plus ou moins automatisé.

Dans une autre réalisation, seule ou en combinaison avec la précédente, le dispositif d'entraînement 13 est tel que les moyens de commande sont responsifs au type et/ou aux caractéristiques de la carcasse et/ou au type de fente à réaliser (par exemple fente complète ou coupe américaine), et/ou à au moins une commande préprogrammée des moyens de programmation du fonctionnement de la machine. Par exemple, selon que les carcasses à traiter sont qualifiées de « petite carcasse » ou au contraire de « grande carcasse », le dispositif d'entraînement 13 agira sur le chariot 7 porte lame de scie sera plus avancé ou au contraire plus reculé.

Avec un tel dispositif d'entraînement 13, les organes constitutifs de la machine 1 sont amenés à jouer de nouvelles fonctions.

En effet, les moyens de programmation du fonctionnement de la machine 1 sont programmés pour qu'en fonctionnement et alors qu'une carcasse C est en situation d'être traitée par la machine 1:
- on amène le chariot 7 porte lame se scie dans la position initiale de sciage souhaitée,
- et on met en position la carcasse C à traiter par la mise en oeuvre conjuguée de part et d'autre de la carcasse C du dispositif d'appui dorsal 11 et du dispositif d'appui ventral 9.
Puis, on procède au sciage de la carcasse C.

La mise en oeuvre conjuguée des dispositifs 9, 11 repose sur un effet d'action - réaction entre les pressions d'air des chambres des vérins du dispositif d'appui dorsal 11 et du dispositif d'appui ventral 9.

Le cas échéant, les moyens de programmation du fonctionnement de la machine 1 sont programmés pour une fente partielle de type coupe américaine. Dans ce cas et afin de laisser un lambeau de peau non fendu dans le dos et en bas de la carcasse C, on fait coulisser le dispositif d'appui ventral 9 vers le côté où se trouve le dispositif d'appui dorsal 11, tout en maintenant ladite mise en oeuvre conjuguée du dispositif d'appui dorsal 11 et du dispositif d'appui ventral 9. Il en résulte que l'on pousse la carcasse C vers l'avant, ce qui la fait échapper à la lame de scie.

## Revendications

1. Dispositif d'entraînement (13) d'un chariot (7) porte outil de fente, spécialement destiné à une machine à fendre les carcasses d'animaux (1), tout spécialement les porcs, ladite machine incluant :
- un chariot principal (6) - formant bâti - ayant des moyens de guidage à coulissement (18a, 18b) pour un chariot (7) porte outil de fente,
- un chariot (7) porte outil de fente supportant un outil de fente mobile (8), ledit chariot (7) porte outil de fente étant mobile à coulissement sur le chariot principal (6) selon une direction avant-arrière ; lorsque le chariot (7) porte outil de fente est en position initiale, ledit chariot (7) porte outil de fente étant mobile à coulissement sur le chariot principal (6) entre une position escamotée et une position initiale de fente où l'extrémité distale (12) de l'outil de fente (8) est apte à interférer avec une carcasse C traitée par la machine ; lorsque le chariot (7) porte outil de fente est en position finale, ledit chariot (7) porte outil de fente étant mobile à coulissement sur le chariot principal (6) entre une position finale de fente et une position escamotée ou l'outil de fente (8) est apte à ne pas interférer avec la carcasse C,
- des moyens (19) d'entraînement de l'outil de fente (8) afin de le rendre opératoire,
- et des moyens de programmation du fonctionnement,
ledit dispositif comprenant des moyens (14) d'entraînement à coulissement du chariot (7) porte outil de fente, portés par le chariot principal (6) et connectés au chariot (7) porte outil de fente, et des moyens de commande desdits moyens d'entraînement,
**caractérisé** :
- d'une part, par des moyens (14) d'entraînement électrique aptes à être arrêtés dans une - ou des - position(s) réglable(s), précise(s) et connue(s) considérée(s) comme des positions de référence pour l'outil de fente,
- d'autre part, en ce que les moyens de commande sont aptes à commander non seulement le fonctionnement et l'arrêt des moyens (14) d'entraînement électrique, mais aussi leur réglage en position, afin de régler la position de référence de l'outil de fente (8) en fonction des besoins.

2. Dispositif d'entraînement (13) selon la revendication 1, **caractérisé en ce que** les positions de référence pour l'outil de fente (8) sont choisies parmi les positions suivantes : position initiale escamotée, position initiale de fente, position finale de fente, position finale escamotée.

3. Dispositif d'entraînement (13) selon l'une quelconque des revendications 1 et 2,
**caractérisé par le fait que** les moyens d'entraînement électriques comprennent un moteur ou un moto-réducteur (14) porté par le chariot principal (6) entraînant un organe mobile (15) auquel est lié cinématiquement le chariot (7) porte outil de fente.

4. Dispositif d'entraînement selon la revendication 3, **caractérisé par le fait que** le moteur ou moto-réducteur (14) est de type brushless.

5. Dispositif d'entraînement selon l'une quelconque des revendications 3 et 4, **caractérisé par le fait que** l'organe mobile (15) lié cinématiquement au chariot porte outil de fente est une courroie, une chaîne ou un câble sans fin, une crémaillère, une vis sans fin.

6. Dispositif d'entraînement selon l'une quelconque des revendications 1 à 5, **caractérisé par le fait que** les moyens de commande sont responsifs à une commande manuelle ou à un signal provenant d'un automate programmable ou de moyens d'évaluation de présence ou de distance.

7. Dispositif d'entraînement selon l'une quelconque des revendications 1 à 6, **caractérisé par le fait que** l'outil de fente (8) est une lame de scie circulaire montée à rotation ou un couteau ou un ensemble de couteaux.

8. Dispositif d'entraînement selon l'une quelconque des revendications 1 à 6, dans le cas où la position de référence pour l'outil de fente (8) est la position initiale de fente et l'outil de fente est une lame de scie, **caractérisé par le fait que** les moyens de commande sont responsifs au degré d'usure de la lame de scie (8) et donc à son diamètre, de manière que la position initiale de sciage de la lame de scie reste constante quelle que soit le degré d'usure de la lame (8).

9. Dispositif d'entraînement selon la revendication 8, **caractérisé par le fait que** le degré d'usure de la lame de scie (8) est déterminé de façon visuelle - par voie humaine ou par un équipement - ou selon les moyens de programmation de la machine.

10. Dispositif d'entraînement selon l'une quelconque des revendications 1 à 9, **caractérisé par le fait que** les moyens de commande sont responsifs au type et/ou aux caractéristiques de la carcasse C et/ou au type de fente à réaliser, et/ou à au moins une commande préprogrammée des moyens de programmation du fonctionnement de la machine (1).

11. Machine à fendre les carcasses d'animaux (1), tout spécialement les porcs, incluant :
- un chariot principal (6) - formant bâti - ayant des moyens de guidage à coulissement pour un chariot (7) porte outil de fente,
- un chariot (7) porte outil de fente supportant un outil de fente (8) mobile, ledit chariot (7) porte outil de fente étant mobile à coulissement sur le chariot principal (6) entre une position escamotée et une position initiale de fente où l'extrémité distale (12) de l'outil de fente (8) est apte à interférer avec une carcasse C positionnée pour être traitée par la machine (1),
- des moyens d'entraînement de l'outil de fente (8) afin de le rendre opératoire,
- et des moyens de programmation du fonctionnement,
**caractérisée par le fait qu'**elle comprend un dispositif d'entraînement (13) du chariot (7) porte outil de fente selon l'une quelconque des revendications 1 à 10.

12. Machine à fendre les carcasses d'animaux selon la revendication 11, **caractérisée par le fait qu'**elle inclut également un dispositif d'appui ventral (9) et/ou un dispositif d'appui dorsal (11), mobile et/ou déformable, apte à venir en appui sur la carcasse C traitée par la machine (1) du côté ventral et/ou dorsal respectivement, le dispositif d'appui ventral (9- étant situé du même côté que le chariot (7) porte outil de fente et l'outil de fente (8), le dispositif d'appui dorsal (11) étant situé du côté opposé au chariot porte (7) outil de fente et à l'outil de fente (8).

13. Machine à fendre les carcasses d'animaux selon la revendication 12, **caractérisée par le fait que** le dispositif d'appui ventral (9) et/ou le dispositif d'appui dorsal (11) est porté par le chariot principal.

14. Machine à fendre les carcasses d'animaux selon la revendication 13, **caractérisée par le fait que** le dispositif d'appui ventral (9) et/ou le dispositif d'appui dorsal (11) est porté par le chariot (7) porte outil de fente.

15. Machine à fendre les carcasses d'animaux selon la revendication 14, **caractérisée par le fait que** le chariot (7) porte outil de fente comporte des moyens de coulissement et des moyens d'entraînement et/ou d'amortissement du mouvement, le dispositif d'appui ventral (9) et/ou le dispositif d'appui dorsal (11) étant porté par le chariot (7) porte outil de fente de façon coulissante selon la direction avant-arrière.

16. Machine à fendre les carcasses d'animaux selon l'une quelconque des revendications 11 à 15, **caractérisée par le fait que** les moyens de programmation du fonctionnement sont programmés soit pour une fente complète de la carcasse en deux demi carcasses soit pour une fente partielle de type américaine.

17. Machine à fendre les carcasses d'animaux selon l'une quelconque des revendications 11 à 16, **caractérisée par le fait qu'**il lui est associé des moyens (2) support des carcasses C d'animaux à traiter, agencés pour assurer un défilement des carcasses à traiter dans la machine (1).

18. Machine à fendre les carcasses d'animaux selon la revendication 17, **caractérisée par le fait qu'**elle est réalisée soit en un seul ensemble situé d'un côté des moyens support des carcasses d'animaux à traiter soit en deux ensembles (3), (4), situés de part et d'autre des moyens (2) support des carcasses C d'animaux à traiter.

19. Machine à fendre les carcasses d'animaux selon la revendication 18, dans le cas où elle est réalisée en deux ensembles (3), (4) situés de part et d'autre des moyens (2) support des carcasses d'animaux à traiter et le dispositif d'appui ventral (9) et/ou le dispositif d'appui dorsal (11) porté par le chariot (7) porte outil de fente **caractérisée par le fait que** :
- un premier ensemble (3) inclut le chariot principal (6), le chariot (7) porte outil de fente, l'outil de fente (8), et le dispositif d'appui ventral (9),
- et un second ensemble (4) inclut le dispositif d'appui dorsal (11).

20. Machine à fendre les carcasses d'animaux selon la revendication 19, **caractérisée par le fait que** le premier ensemble (3) inclut une première colonne (5) supportant le chariot principal (6), le chariot (7) porte outil de fente, l'outil de fente (8) et le dispositif d'appui ventral (9) et le second ensemble (4) inclut une seconde colonne (10) supportant le dispositif d'appui dorsal (11).

21. Machine à fendre les carcasses d'animaux selon la revendication 20, **caractérisée par le fait que** la première colonne (5) et la seconde colonne (10) forment un ensemble monobloc.

22. Machine à fendre les carcasses d'animaux selon l'une quelconque des revendications 12 à 21, **caractérisée par le fait que** les moyens de programmation du fonctionnement de la machine (1) sont programmés pour qu'en fonctionnement et alors qu'une carcasse C est en situation d'être traitée par la machine:
- on amène le chariot (7) porte outil de fente dans la position initiale de fente souhaitée,
- et on met en position la carcasse C à traiter par la mise en oeuvre conjuguée de part et d'autre de la carcasse du dispositif d'appui dorsal (11) et du dispositif d'appui ventral (9), ladite mise en oeuvre conjuguée reposant sur un effet d'action - réaction entre les pressions d'air des chambres des vérins du dispositif d'appui dorsal (11) et du dispositif d'appui ventral (9).

23. Machine à fendre les carcasses d'animaux selon la revendication 22, dans le cas où les moyens de programmation du fonctionnement sont programmés pour une fente partielle de type américaine, **caractérisée par le fait que** pour laisser un lambeau de peau non fendu dans le dos et en bas de la carcasse (coupe américaine), on fait coulisser le dispositif d'appui ventral (9) vers le côté où se trouve le dispositif d'appui dorsal (11), tout en maintenant ladite mise en oeuvre conjuguée du dispositif d'appui dorsal (11) et du dispositif d'appui ventral (9).
